# EUROPÄISCHE PATENTSCHRIFT

(11) **EP 1 499 820 B1**
(45) Veröffentlichungstag und Bekanntmachung des Hinweises auf die Patenterteilung: **01.10.2008**
(21) Anmeldenummer: 03727191.3
(22) Anmeldetag: 10.04.2003
(51) Int. Cl.: F16H 61/32, F16H 63/30

(54) **GETRIEBEAKTOR MIT EINER LAGERSTELLE FüR DIE SCHALTSCHIENEN**
GEARBOX ACTUATOR COMPRISING A BEARING FOR THE GEARSHIFT RAILS
DISPOSITIF D'ACTIONNEMENT DE TRANSMISSION COMPRENANT UNE ZONE D'APPUI DESTINEE A DES RAILS DE SELECTION

(30) Priorität: 10.04.2002 DE 10215715; 05.09.2002 DE 10241068
(43) Veröffentlichungstag der Anmeldung: 26.01.2005
(73) Patentinhaber: LuK Lamellen und Kupplungsbau Beteiligungs KG, 77815 Bühl (DE)
(72) Erfinder: POLLAK, Burkhard, 77815 Bühl (DE); MORGAN, Terry, Leamington Spa CV32 7LE (GB); LETHBRIDGE, James, Antony, Warwickshire CV31 2HZ (GB); BATES, Ian Richard Joseph, Huddersfield, West Yorkshire HD3 3XZ (GB)
(86) Internationale Anmeldenummer: PCT/DE2003/001195
(87) Internationale Veröffentlichungsnummer: WO 2003/087635

(56) Entgegenhaltungen:
- US-A- 4 873 881
- US-A- 5 146 806
- US-B1- 6 321 615

## Beschreibung

Die vorliegende Erfindung betrifft einen Getriebeaktor mit einer durch einen Antrieb angetriebenen, in einem Gehäuse angeordneten Schaltwelle, an der ein Schaltfinger und Auslegegeometrien angeordnet sind, die Schaltschienen betätigen.

Üblicherweise sind die Schaltschienen eines Getriebeaktors aus Blech gefertigt und an ihren beiden Enden gelagert. Ein Problem besteht dabei darin, dass sich bei größeren bzw. längeren Getrieben eine relativ biegeweiche Lagerung der Schaltschienen ergibt.

In der gattungsbildenden US-A-5 146 806 wird eine Schaltvorrichtung für ein synchronisiertes Getriebe eines Kraftfahrzeuges, insbesondere eine einfache und kostengünstige Arretierung der Schaltschienen untereinander und gegenüber dem Getriebe offenbart.

Die Aufgabe der vorliegenden Erfindung besteht daher darin, einen Getriebeaktor so auszugestalten, dass die Schaltschienen relativ biegesteif gelagert sind.

Diese Aufgabe wird durch einen Getriebeaktor mit einer durch einen Antrieb angetriebenen, in einem Gehäuse angeordneten Schaltwelle gelöst, an der ein Schaltfinger und Auslegegeometrien angeordnet sind, die Schaltschienen betätigen, wobei an dem Gehäuse eine Lageranordnung angeordnet ist, die zwischen sich die Schaltschienen stützt und führt.
Der wesentliche Vorteil der Erfindung besteht darin, dass durch eine zusätzliche Lagerstelle bzw. -anordnung des Getriebeaktors die Schaltschienen vorzugsweise mittig gestützt werden, so dass sie relativ biegesteif gelagert sind. Aus diesem Grunde können unerwünschte und schädliche Verschiebungen der Schaltschienen, wie sie durch Vibrationen und Stöße verursacht werden können, vermieden werden.

Die Lageranordnung wird besonders einfach und vorteilhaft durch an dem Gehäuse angeordnete Kragarme gebildet, die zwischen sich die Schaltschienen stützen und führen.

Besonders bevorzugt umfasst das Gehäuse des Getriebeaktors ein Befestigungsteil, mit dem es an einem Getriebegehäuse eines Getriebes befestigbar ist, derart, dass die Kragarme durch eine Öffnung oder Ausnehmung des Getriebegehäuses in dieses hineinragen, um die Schaltschienen aufnehmen zu können. Zweckmäßigerweise weisen das Befestigungsteil und die Kragarme die Form eines Spritzgussteiles auf.

Um eine besonders gute Abstützung und Führung der Schaltschienen zu erreichen, sind bei einer Ausführungsform der Erfindung zwei obere Kragarme und zwei untere Kragarme vorgesehen sind, die sich in Bezug auf die Schaltwelle jeweils gegenüberliegen. Bei einer einfacheren Ausführungsform der Erfindung sind vorzugsweise nur zwei Kragarme vorgesehen. Die vier oder zwei Kragarme liegen sich in Bezug auf die Schaltwelle vorzugsweise symmetrisch gegenüber.

Um ein besonders reibungsfreies und auch relativ verschleißfreies Angreifen der Kragarme an den Gleitschienen zu ermöglichen, weisen die Kragarme vorzugsweise an ihren an den Schaltschienen anliegenden Endbereichen Gleitschuhteile auf.

Im folgenden werden die Erfindung und deren Ausgestaltungen im Zusammenhang mit den Figuren näher erläutert. Es zeigen:
- Figur 1: in dreidimensionaler Darstellung einen Getriebeaktor;
- Figur 2: eine Explosionsdarstellung des Getriebeaktors der Figur 1; und
- Figur 3: eine Weiterbildung der Erfindung.

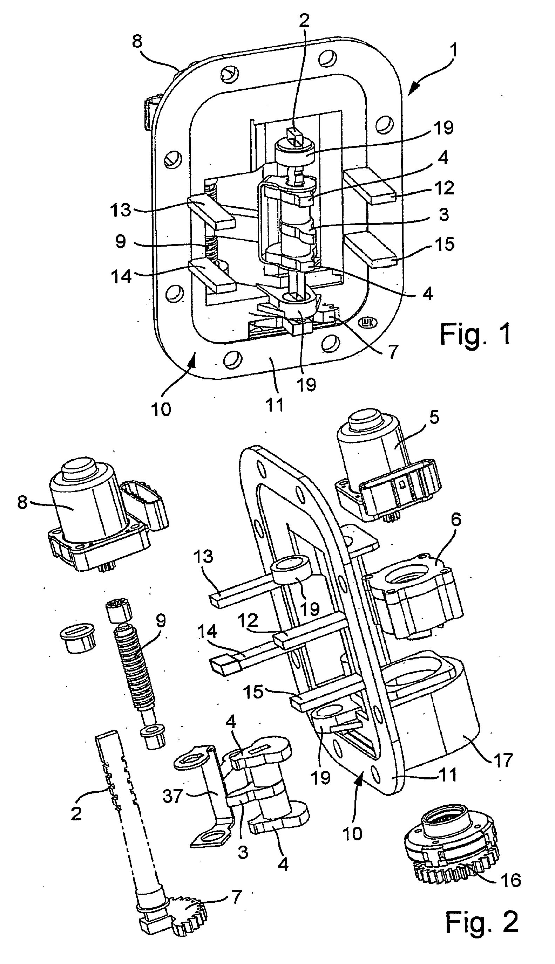

Der Getriebeaktor 1 umfasst in an sich bekannter Weise eine, in Lagerteilen 19 gelagerte zentrale Schaltwelle 2, die zum Beispiel in der Mitte einen Schaltfinger 3 und zwei Auslegegeometrien 4, 4 aufweist, die in einem Abstand entsprechend einer Gassenbreite angeordnet sind. Die Schaltwelle 2 wird vorzugsweise durch einen bürstenlosen Motor 5 über eine doppelte Planetenstufe 6 und ein Zahnsegment 7 angetrieben, das mit einem, vorzugsweise in einem Gehäuseteil 17 gelagerten Zahnrad 16 kämmt. Ein vorzugsweise zweiter bürstenloser Motor 8 treibt über eine Spindel 9 ein Schiebeelement 37 an, das den Schaltfinger 3 und die Auslegegeometrien 4, 4 auf der Schaltwelle 2 verschiebt. Der Aufbau dieses an sich bekannten Getriebeaktors 1 ist aus der Explosionsdarstellung der Figur 2 besonders deutlich erkennbar.

In den Figuren 1 und 2 ist das Gehäuse des Getriebeaktors 1 mit 10 bezeichnet. Es weist ein vorzugsweise platten- oder flanschförmiges Befestigungsteil 11 auf, mit dem es an einem Getriebe (nicht dargestellt) befestigt wird. Das Gehäuse 10 weist eine weitere Lageranordnung für die Schaltschienen auf, die vorzugsweise zwei obere Kragarme 12, 13 sowie zwei untere Kragarme 14, 15 umfasst, die vorzugsweise von dem Befestigungsteil 11 aus in das Getriebe vorstehen und zwischen sich das Paket der Schaltschienen führen und unterstützen. Vorzugsweise liegen sich die oberen und unteren Kragarme 12, 13, 14, 15 in Bezug auf die Schaltwelle 2 symmetrisch gegenüber. Es ist auch denkbar, anstelle der erläuterten vier Kragarme bei einer vereinfachten Ausführungsform der Erfindung nur zwei Kragarme vorzusehen. Besonders bevorzugt handelt es sich bei dem Gehäuse 10, dem Befestigungsteil 11, den Lagerstellen 19 und den Kragarmen 12 bis 15 um ein Spritzgussteil, das gegebenenfalls auch das Gehäuseteil 17 umfassen kann. An den Enden der Kragarme 12 bis 15 können gemäß einer Weiterbildung der Erfindung an den Kontaktflächen zu den Schaltschienen Gleitschuhteile angeordnet sein, die vorzugsweise aus Kunststoff bestehen und aufgeclipst sein können. Ein solches Gleitschuhteil ist in der Figur 2 schematisch dargestellt und mit 38 bezeichnet.

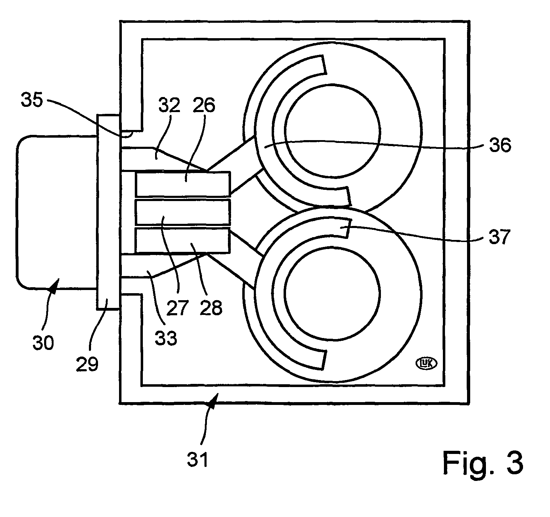

Die Figur 3 zeigt eine Weiterbildung der Erfindung, bei der eine zusätzliche Abstützung für die Schaltschienen 26, 27, 28 an einem Gehäuse eines Getriebeaktors 30 angeordnet ist, um Verschiebungen der Schaltschienen 26, 27, 28 zu vermindern bzw. zu vermeiden, die auf Vibrationen und Stöße zurückzuführen sind. Vorteilhaft ist es dabei, dass die zusätzliche Abstützung die Ausführung des Gehäuses nicht verkompliziert.

In der Figur 3 ist das Getriebegehäuse des Getriebes, vorzugsweise eines Doppelkupplungsgetriebes, mit 31 bezeichnet. Der Getriebeaktor 30 wird, nachdem er zusammengebaut wurde, an das Getriebegehäuse 31 angesetzt und an diesem befestigt, beispielsweise verschraubt. Der Getriebeaktor 30 weist an seiner dem Getriebegehäuse 31 zugewandten Seite zur Abstützung wenigstens zwei Stützschienen bzw. Kragarme 32, 33 auf, die vorzugsweise ausgehend von einem Flansch- oder Befestigungsteil 29, mit dem der Getriebeaktor 30 an dem Getriebegehäuse 31 befestigt ist, durch eine Öffnung 35 desselben in das Innere des Getriebegehäuses 31 hineinragen. Diese Kragarme 32, 33 nehmen zwischen sich das Paket der Schaltschienen 26, 27, 28 auf, die mit den Schaltgabeln 36, 37 verbunden sind.

Während des Schaltvorganges werden die Schaltschienen 26, 27, 28 zwischen den Kragarmen 32, 33 geführt und gestützt. Bei dem Anbau des Getriebeaktors 30 an das Getriebegehäuse 31 stellen die zusätzlichen Kragarme 32, 33 keine Beeinträchtigungen dar, da sie einfach durch die Öffnung 35 des Getriebegehäuses 31 eingeführt werden, um zwischen sich die Schaltschienen 26, 27 und 28 aufzunehmen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Getriebeaktor (1, 30) mit einer durch einen Antrieb (5) angetriebenen, in einem Gehäuse (10, 31) angeordneten Schaltwelle (2), an der ein Schaltfinger (3) und Auslegegeometrien (4, 4) angeordnet sind, die Schaltschienen (26, 27, 28), die an ihren beiden Enden gelagert sind, betätigen, **dadurch gekennzeichnet, dass** an dem Gehäuse (10, 31) eine weitere Lageranordnung angeordnet ist, die zwischen sich die Schaltschienen (26, 27, 28) stützt und führt.

2. Getriebeaktor nach Anspruch 1, **dadurch gekennzeichnet, dass** die weitere Lagerordnung derart angeordnet ist, dass sie die Schaltschienen (26, 27, 28) in Bezug auf die Enden der Schaltschienen mittig stützt und führt, sodass die Schaltschienen biegesteif gelagert sind.

3. Getriebeaktor nach Anspruch 1 oder 2, **dadurch gekennzeichnet, dass** die weitere Lageranordnung durch Kragarme (12, 13, 14, 15, 32, 33) gebildet ist, die die Schaltschienen (26, 27, 28) zwischen sich aufnehmen.

4. Getriebeaktor nach Anspruch 3, **dadurch gekennzeichnet, dass** das Gehäuse (10) ein Befestigungsteil (11, 29) umfasst, mit dem es derart an einem Getriebegehäuse (31) eines Getriebes befestigbar ist, dass die Kragarme (12, 13, 14, 15, 32, 33) durch eine Öffnung oder Ausnehmung (35) des Getriebegehäuses (31) in dieses hineinragen.

5. Getriebeaktor nach Anspruch 3 oder 4, **dadurch gekennzeichnet, dass** das Befestigungsteil (11, 29) und die Kragarme (12, 13, 14, 15, 32, 33) die Form eines Spritzgussteiles aufweisen.

6. Getriebeaktor nach einem der Ansprüche 1 bis 5, **dadurch gekennzeichnet, dass** zwei obere Kragarme (12, 13) und zwei untere Kragarme (14, 15) vorgesehen sind, die sich in Bezug auf die Schaltwelle (2) gegenüberliegen.

7. Getriebeaktor nach einem der Ansprüche 1 bis 5, **dadurch gekennzeichnet, dass** zwei Kragarme vorgesehen sind.

8. Getriebeaktor nach einem der Ansprüche 1 bis 7, **dadurch gekennzeichnet, dass** sich jeweils zwei Kragarme in Bezug auf die Schaltwelle symmetrisch gegenüberliegen.

9. Getriebeaktor nach einem der Ansprüche 1 bis 8, **dadurch gekennzeichnet, dass** die Kragarme (12, 13, 14, 15, 32, 33) an ihren an den Schaltschienen (26, 27, 28) anliegenden Enden Gleitschuhteile (38) aufweisen.

10. Getriebeaktor nach einem der Ansprüche 1 bis 9, **dadurch gekennzeichnet, dass** das Gehäuse (10, 31), Lagerteile (19) für die Schaltwelle (2) und die Kragarme (12, 13, 14, 15, 32, 33) als ein Spritzgussteil ausgebildet sind.

## Claims

1. Transmission actuator (1, 30) having a shift shaft (2) which is driven by a drive (5) and which is arranged in a housing (10, 31) and on which are arranged a shift finger (3) and disengaging geometries (4, 4) which actuate shift rails (26, 27, 28) which are mounted at their two ends, **characterized in that** a further mounting arrangement is arranged on the housing (10, 31), which mounting arrangement supports and guides between it the shift rails (26, 27, 28).

2. Transmission actuator according to Claim 1, **characterized in that** the further mounting arrangement is arranged so as to support and guide the shift rails (26, 27, 28) centrally with respect to the ends of the shift rails, such that the shift rails are mounted in a bending-resistant fashion.

3. Transmission actuator according to Claim 1 or 2, **characterized in that** the further mounting arrangement is formed by cantilevers (12, 13, 14, 15, 32, 33) which hold the shift rails (26, 27, 28) between them.

4. Transmission actuator according to Claim 3, **characterized in that** the housing (10) comprises a fastening part (11, 29), by means of which said housing (10) can be fastened to a transmission housing (31) of a transmission in such a way that the cantilevers (12, 13, 14, 15, 32, 33) project into the transmission housing (31) through an opening or recess (35) of the latter.

5. Transmission actuator according to Claim 3 or 4, **characterized in that** the fastening part (11, 29) and the cantilevers (12, 13, 14, 15, 32, 33) are in the form of an injection-moulded part.

6. Transmission actuator according to one of Claims 1 to 5, **characterized in that** two upper cantilevers (12, 13) and two lower cantilevers (14, 15) are provided, which are situated opposite one another with respect to the shift shaft (2).

7. Transmission actuator according to one of Claims 1 to 5, **characterized in that that** two cantilevers are provided.

8. Transmission actuator according to one of Claims 1 to 7, **characterized in that** in each case two cantilevers are situated symmetrically opposite one another with respect to the shift shaft.

9. Transmission actuator according to one of Claims 1 to 8, **characterized in that** the cantilevers (12, 13, 14, 15, 32, 33) have, on their ends, sliding shoe parts (38) which bear against the shift rails (26, 27, 28).

10. Transmission actuator according to one of Claims 1 to 9, **characterized in that** the housing (10, 31), mounting parts (19) for the shift shaft (2) and the cantilevers (12, 13, 14, 15, 32, 33) are formed as an injection-moulded part.

## Revendications

1. Dispositif d'actionnement de transmission (1, 30) comprenant un arbre de changement de vitesse (2) entraîné par un entraînement (5) et disposé dans un carter (10, 31), sur lequel sont disposés un doigt de changement de vitesse (3) et des géométries de conception (4, 4) qui actionnent des tringles de changement de vitesse (26, 27, 28) qui sont supportées à leurs deux extrémités, **caractérisé en ce que** l'on prévoit sur le carter (10, 31) un autre agencement de support qui supporte et guide les tringles de changement de vitesse (26, 27, 28) entre elles.

2. Dispositif d'actionnement de transmission selon la revendication 1, **caractérisé en ce que** l'autre agencement de support est disposé de telle sorte qu'il supporte et guide centralement les tringles de changement de vitesse (26, 27, 28) par rapport aux extrémités des tringles de changement de vitesse, de sorte que les tringles de changement de vitesse soient supportées de manière rigide en flexion.

3. Dispositif d'actionnement de transmission selon la revendication 1 ou 2, **caractérisé en ce que** l'autre agencement de support est formé par des bras en porte-à-faux (12, 13, 14, 15, 32, 33) qui reçoivent entre eux les tringles de changement de vitesse (26, 27, 28).

4. Dispositif d'actionnement de transmission selon la revendication 3, **caractérisé en ce que** le carter (10) comprend une partie de fixation (11, 29) avec laquelle il peut être fixé à un carter de transmission (31) d'une transmission de telle sorte que les bras en porte-à-faux (12, 13, 14, 15, 32, 33) pénètrent dans celui-ci à travers une ouverture ou un évidement (35) du carter de transmission (31).

5. Dispositif d'actionnement de transmission selon la revendication 3 ou 4, **caractérisé en ce que** la partie de fixation (11, 29) et les bras en porte-à-faux (12, 13, 14, 15, 32, 33) présentent la forme d'une pièce moulée par injection.

6. Dispositif d'actionnement de transmission selon l'une quelconque des revendications 1 à 5, **caractérisé en ce que** deux bras en porte-à-faux supérieurs (12, 13) et deux bras en porte-à-faux inférieurs (14, 15) sont prévus, lesquels sont opposés l'un à l'autre par rapport à l'arbre de changement de vitesse (2).

7. Dispositif d'actionnement de transmission selon l'une quelconque des revendications 1 à 5, **caractérisé en ce que** deux bras en porte-à-faux sont prévus.

8. Dispositif d'actionnement de transmission selon l'une quelconque des revendications 1 à 7, **caractérisé en ce que** deux bras en porte-à-faux sont à chaque fois opposés l'un à l'autre symétriquement par rapport à l'arbre de changement de vitesse.

9. Dispositif d'actionnement de transmission selon l'une quelconque des revendications 1 à 8, **caractérisé en ce que** les bras en porte-à-faux (12, 13, 14, 15, 32, 33) présentent des pièces formant patin (38) à leurs extrémités s'appliquant contre les tringles de changement de vitesse (26, 27, 28).

10. Dispositif d'actionnement de transmission selon l'une quelconque des revendications 1 à 9, **caractérisé en ce que** le carter (10, 31), les pièces de support (19) pour l'arbre de changement de vitesse (2) et les bras en porte-à-faux (12, 13, 14, 15, 32, 33) sont réalisés sous forme de pièce moulée par injection.
